# EUROPÄISCHE PATENTANMELDUNG

(11) **EP 1 304 901 A1**
(43) Veröffentlichungstag der Anmeldung: **23.04.2003**
(21) Anmeldenummer: 01440347.1
(22) Anmeldetag: 19.10.2001
(51) Int. Cl.: H04Q 11/00, H04Q 11/04

(54) **Synchronisation einer paketbasierenden Vermittlungsanlage**

(71) Anmelder: ALCATEL, 75008 Paris (FR)
(72) Erfinder: Bunse, Stephan, 70565 Stuttgart (DE)
(74) Vertreter: KOHLER SCHMID + PARTNER

(57) **Zusammenfassung**

Ein Verfahren zur Inbetriebnahme einer Leitungsanschlusseinheit (LE1) mit einem Sendeempfänger (SE1) in einer Vermittlungsanlage (VA) mit einem Koppelfeld (KF) für paketorientierte Vermittlung ohne das Erfordernis einer Längenanpassung der Leitungen sowie der Vergabe eines Pakettaktes beinhaltet folgende Schritte:
(a) Am Eingang oder innerhalb des Koppelfelds wird ein Koppelpunkt (KP1) außerhalb von Schutzzeiten derart geschlossen, dass vom Sendeempfänger (SE1) der Leitungsanschlusseinheit (LE1) am Koppelpunkt (KP1) ankommende Signale zum Sendeempfänger (SE1) reflektiert werden.
(b) Die Leitungsanschlusseinheit (LE1) sendet Datenpakete an den Koppelpunkt (KP1) und variiert deren Absendebeginn oder Absendeende, bis die Datenpakete am Koppelpunkt (KP1) zeitlich derart synchronisiert eintreffen, dass kein Abschnitt eines Datenpakets während der Schutzzeit des Koppelpunktes (KP1) eingeht.
(c) Die Leitungsanschlusseinheit (LE1) meldet an ein Steuerungssystem (SS) zur Steuerung des Koppelfelds (KF) und der Leitungsanschlusseinheiten (LE) der Vermittlungsanlage (VA), dass nun Synchronisation der Leitungsanschlusseinheit (LE1) mit dem Koppelfeld (KF) erreicht ist.
(d) Das Steuerungssystem (SS) öffnet den der Leitungsanschlusseinheit (LE1) zugeordneten Koppelpunkt (KP1) dauerhaft und geht in den normalen Vermittlungsbetrieb über.

## Beschreibung

Die Erfindung betrifft ein Verfahren zur Inbetriebnahme einer Leitungsanschlusseinheit mit einem Sendeempfänger in einer Vermittlungsanlage mit einem Koppelfeld für paketorientierte Vermittlung, insbesondere in einem Telekommunikations (=TK)-Netzwerk, sowie eine entsprechende Vermittlungsanlage, ein Koppelfeld, eine Leitungsanschlusseinheit und ein Computerprogramm zur Durchführung des Verfahrens.

Vermittlungsanlagen mit einem Koppelfeld für eine paketorientierte Vermittlung von Datenpaketen zwischen Leitungsanschlusseinheiten mit Sendeempfängern sind seit langem auf dem Gebiet der Telekommunikation bekannt.

Eine solche paketbasierende Vermittlungsanlage besteht aus mehreren Leitungsanschlusseinheiten und einem Koppelfeld, das die Leitungsanschlusseinheiten miteinander verbindet. Dabei sind das Koppelfeld und die Leitungsanschlusseinheiten an ein gemeinsames Steuerungssystem angeschlossen.

Die Leitungsanschlusseinheiten wandeln unterschiedliche externe Signalformate in ein gemeinsames, paketbasiertes Datenformat um, mit dem das Koppelfeld betrieben wird. Die Leitungsanschlusseinheiten können mehrstufig aufgebaut sein, ebenso wie auch das Koppelfeld. Zur Erleichterung der Anforderungen an das Koppelfeld wird zugelassen, dass die Leitungsanschlusseinheiten Sendeempfänger besitzen, die sowohl zeitliche als auch amplitudenmäßige Schwankungen der übertragenen Signale ausgleichen können.

Die einzelnen Datenpakete sind zusätzlich durch Schutzzeiten voneinander getrennt, so dass eine zeitliche Verschiebung der einzelnen Datenpakete zu keinen Störungen führen. Die Schutzzeiten ergeben sich zum einen aus den Schaltzeiten der Koppelpunkte des Koppelfeldes und zum anderen aus den unterschiedlichen Laufzeiten im Koppelfeld selbst. Durch diese Maßnahmen ist die Verwendung optischer und elektronischer Koppelfelder ohne Synchronisation am Eingang möglich. Hierzu werden die Pakete so definiert, dass jeder Paketkopf eine Synchronisationssequenz aufweist, mit deren Hilfe auf jedes einzelne Paket bitsynchronisiert werden kann.

Dabei ergibt sich jedoch das Problem, dass, wenn die Leitungsanschlusseinheiten vom Koppelfeld abgesetzt betrieben werden, die einzelnen Pakete nicht mehr zwangsläufig innerhalb des vorgegebenen Zeitfensters am Koppelfeld eintreffen. Deshalb werden in diesem Fall die Leitungslängen der Takt- und Datensignale zwischen dem Koppelfeld und der entsprechenden Leitungsanschlusseinheit ziemlich exakt angepasst. Außerdem wird ein Pakettakt in der Vermittlungsanlage verteilt werden. Beides ist ungünstig. Als weiterer Nachteil ist zu nennen, dass es bei einem Einschalten einer Leitungsanschlusseinheit im laufenden Betrieb der Vermittlungsanlage bei nicht ausreichend exakter Paketsynchronisation zu Störungen bei anderen Signalen kommen kann.

Aufgabe der vorliegenden Erfindung ist es nun, ein Verfahren, eine Vermittlungsanlage, ein Koppelfeld und eine Leitungsanschlusseinheit der eingangs beschriebenen Art mit einfachen Mitteln dahingehend weiterzubilden, dass es ermöglicht wird, eine Leitungsanschlusseinheit neu in Betrieb zu nehmen, ohne dass die Leitungslängen der Takt- und Datensignale zwischen dem Koppelfeld und der entsprechenden Leitungsanschlusseinheit angepasst werden müssen und ohne dass ein Pakettakt in der Vermittlungsanlage verteilt werden muss.

Erfindungsgemäß wird diese Aufgabe auf ebenso überraschend einfache wie wirkungsvolle Art und Weise durch folgende Verfahrensschritte gelöst:
(a) Am Eingang oder innerhalb des Koppelfelds wird ein Koppelpunkt außerhalb von Schutzzeiten, während derer die Koppelpunkte des Koppelfeldes umgeschaltet werden und keine Datenübertragung von und zu den Sendeempfängern der Leitungsanschlusseinheiten stattfindet, derart geschlossen, dass vom Sendeempfänger der Leitungsanschlusseinheit am Koppelpunkt ankommende Signale zum Sendeempfänger reflektiert werden.
(b) Die Leitungsanschlusseinheit sendet über ihren Sendeempfänger Datenpakete an den Koppelpunkt und variiert deren zeitlichen Absendebeginn oder zeitliches Absendeende, bis die Datenpakete am Koppelpunkt zeitlich derart synchronisiert eintreffen, dass kein Abschnitt eines Datenpakets während der Schutzzeit des Koppelpunktes eingeht, so dass die vom Koppelpunkt reflektierten Datenpakete unverstümmelt am Sendeempfänger wieder empfangen werden.
(c) Die Leitungsanschlusseinheit meldet an ein Steuerungssystem zur Steuerung des Koppelfelds und der Leitungsanschlusseinheiten der Vermittlungsanlage, dass nun Synchronisation der Leitungsanschlusseinheit mit dem Koppelfeld erreicht ist.
(d) Das Steuerungssystem öffnet den der Leitungsanschlusseinheit zugeordneten Koppelpunkt dauerhaft und geht in den normalen Vermittlungsbetrieb über.

Dadurch wird keine Längenanpassung der verwendeten Leitungen mehr erforderlich, es bedarf keiner Verteilung eines Pakettakts, die Verkabelung der Vermittlungsanlage kann erheblich einfacher gestaltet werden und es kommt nicht mehr zu Störungen des Koppelfeldes während der Paketsynchronisation.

Bevorzugt ist eine besonders einfach durchzuführende Variante des erfindungsgemäßen Verfahrens, die sich dadurch auszeichnet, dass das Nutzlastfeld der vom Sendeempfänger zu übertragenden Datenpakete zumindest während Verfahrensschritt (b) mit einem bestimmten Bitmuster, beispielsweise mit 8 Bit Zahlen, versehen wird, dass die Leitungsanschlusseinheit, insbesondere der Sendeempfänger einen etwaigen Defekt des Bitmusters eines in den Schritten (a) oder (b) vom Koppelpunkt reflektierten und vom Sendeempfänger empfangenen Datenpakets aufgrund einer ungenügenden Synchronisation detektiert und erkennen kann, an welcher Stelle im zeitlichen Verlauf des Datenpakets sich der Defekt befindet und um welchen Betrag der zeitliche Absendebeginn oder das zeitliche Absendeende der Datenpakete in Schritt (b) verschoben werden muss, damit der Pakettakt synchron auf den Schutzzeittakt des Koppelfeldes passt.

In den Rahmen der vorliegenden Erfindung fällt auch ein Koppelfeld für paketorientierte Vermittlung mit zugehöriger Steuerung, mit Mitteln zur Durchführung des oben beschriebenen erfindungsgemäßen Verfahrens.

Besonders einfach ist eine Ausführungsform des erfindungsgemäß modifizierten Koppelfeldes, bei der auch die Diagonalpunkte der Koppelmatrix, die im normalen Vermittlungsbetrieb nicht gebraucht werden, mit Schaltern besetzt sind, um Koppelpunkte zu schaffen, von denen in den Verfahrensschritten (a) und (b) die von einer zu initiierenden Leitungsanschlusseinheit ausgesandten Signale zu dieser zurückreflektiert werden.

Da bei den meisten gebräuchlichen Koppelfeldern die Diagonalpunkte der Koppelmatrix nicht besetzt sind, eignet sich zur Nachrüstung der Erfindung auf einer vorhandenen Vermittlungsanlage eine Ausführungsform des erfindungsgemäß modifizierten Koppelfeldes, bei der separate Hilfskoppelpunkte zum Reflektieren eines von einem Sendeempfänger einer Leitungsanschlusseinheit zurück zum selben Sendeempfänger vorgesehen sind um die erfindungsgemäßen Verfahrensschritte (a) und (b) ausführen zu können.

Weiterhin fällt in den Rahmen der Erfindung eine Leitungsanschlusseinheit mit Sendeempfänger, die Mittel zur Durchführung der oben beschriebenen Verfahrensschritte (b) und (c) aufweist, sowie eine Vermittlungsanlage mit Koppelfeld, Steuerungssystem und Leitungsanschlusseinheiten zur Durchführung des erfindungsgemäßen Verfahrens.

Schließlich fällt in den Rahmen der Erfindung auch ein Computerprogramm zur Unterstützung bzw. zur Durchführung der Berechnungen, eine Servereinheit, insbesondere ein Netzwerk-Server, sowie eine Prozessorbaugruppe, insbesondere ein digitaler Signalprozessor (=DSP) zur Unterstützung des erfindungsgemäßen Verfahrens. Das erfindungsgemäße Verfahren kann damit besonders schnell und zuverlässig durchgeführt werden.

Weitere Vorteile der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Die Erfindung ist in der Zeichnung dargestellt und wird anhand von Ausführungsbeispielen näher erläutert. Es zeigen:
- Fig.1: ein Prinzipbild der Struktur einer paketbasierenden Vermittlungsanlage in einem TK-Netzwerk;
- Fig.2: ein Schema des Zeitverlaufs von Synchronisationspaketen am Ausgang eines Sendeempfängers;
- Fig.3: ein Zeitverlaufsschema der Ansteuerungssignale eines Koppelpunktes mit dazwischen liegenden Schutzzeiten; und
- Fig.4: ein Zeitverlaufsschema eines im Nutzlastbereich zerstörten Signals bei fehlender Synchronisation auf die Schutzzeiten des angesendeten Koppelpunkts.

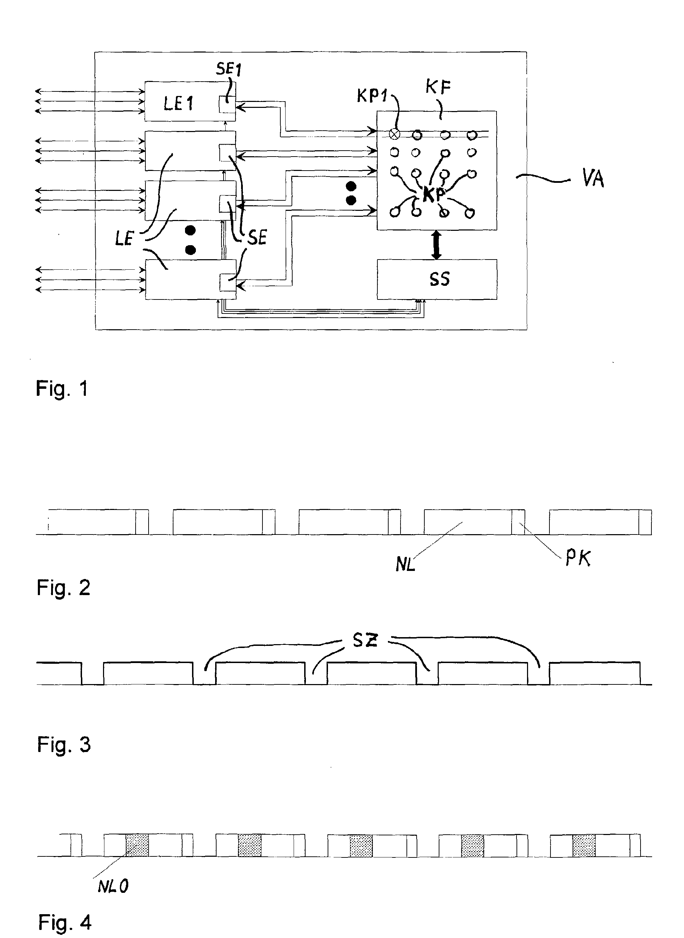

Die in Fig. 1 schematisch dargestellte paketbasierende Vermittlungsanlage VA umfasst eine Vielzahl von Leitungsanschlusseinheiten LE1, LE mit Sendeempfängern SE1, SE, ein Koppelfeld KF mit Koppelpunkten KP1, KP sowie ein Steuerungssystem SS zur Ansteuerung der Sende- und Empfangsaktivitäten der Leitungsanschlusseinheiten LE1, LE und des Koppelfeldes KF.

Nach der Aktivierung einer neuen Leitungsanschlusseinheit LE1 in der Vermittlungsanlage VA mit dem Koppelfeld KF meldet sich die Leitungsanschlusseinheit LE1 zunächst am gemeinsamen Steuerungssystem SS an. Das Steuerungssystem SS weist das Koppelfeld KF an, den der Leitungsanschlusseinheit LE1 im Koppelfeld KF zugeteilten Koppelpunkt KP1 im Pakettakt zu schalten, der den Ein- und Ausgang des Sendeempfängers SE1 der neuen Leitungsanschlusseinheit LE1 miteinander verbindet.

Dies kann entweder, wie bei dem in Fig.1 gezeigten Ausführungsbeispiel ein Koppelpunkt des Koppelfeldes KF sein. Alternativ kann aber auch ein (in der Zeichnung nicht dargestellter) Hilfs-Koppelpunkt vorgesehen sein, der zusätzlich zum Koppelfeld KF die Anschlüsse des Sendeempfängers SE1 direkt an dem Koppelfeld KF miteinander verbindet.

Der zeitliche Verlauf von Synchronisationspaketen am Ausgang eines Sendeempfängers SE ist in Fig.2 dargestellt.

Die Datenpakete folgen mit einem gewissen zeitlichen Abstand aufeinander und umfassen einen Paketkopf PK mit einer Sequenz zur Bitsynchronisation sowie einen Nutzlastteil NL, in welchem die eigentlich interessierenden Daten transportiert werden.

Das in Fig.3 dargestellte Ansteuersignal vom Steuerungssystem SS ist so gestaltet, dass während der Schutzzeiten SZ der Koppelpunkt KP1 gesperrt ist, ansonsten aber das Sendesignal vom Sendeempfänger SE1 zu diesem zurückgeschickt wird.

In Fig. 4 schließlich ist der Zeitverlauf von Synchronisationspaketen am Eingang des Sendeempfängers SE1 dargestellt, bei denen aufgrund fehlender oder mangelhafter Synchronisation ein Bereich NL0 der Nutzlast NL zerstört ist, weil das entsprechende am Koppelpunkt KP1 ankommende Signalpaket gerade in ein Schutzzeitintervall SZ hineingelaufen ist.

Auf der internen Empfangsseite kann der Sendeempfänger SE1 bzw. die Leitungsanschlusseinheit LE1 beim Empfang eines solchen unvollständigen Datenpakets auf mangelnde Synchronisation mit dem Koppelfeld KF schließen. Um die korrekte Synchronisation herzustellen, verschiebt der Sendeempfänger SE1 den zeitlichen Anfang oder das Ende des Datenpakets so lange, bis die günstigste Phasenlage, ermittelt ist, bei welcher die empfangenen, vom Koppelpunkt KP1 zur Leitungsanschlusseinheit LE1 zurückreflektierten Datenpakete keine Defekte mehr aufweisen.

Zur Vereinfachung des Verfahrens kann der Sender das Nutzlast Feld NL des Pakets mit einem Bitmuster (beispielsweise 8 Bit Zahlen) versehen, so dass sich bei einem Abschneiden des Bitmusters sofort erkennen lässt, wie das Paket zeitlich verschoben werden muss, damit es auf den Pakettakt des Koppelfeldes KF passt.

Sobald auf diese Weise die Synchronisation erreicht ist, kann die neue Leitungsanschlusseinheit LE1 in Betrieb gehen.

## Patentansprüche

1. Verfahren zur Inbetriebnahme einer Leitungsanschlusseinheit (LE1) mit einem Sendeempfänger (SE1) in einer Vermittlungsanlage (VA) mit einem Koppelfeld (KF) für paketorientierte Vermittlung, insbesondere in einem Telekommunikations (=TK)-Netzwerk, mit folgenden Schritten :
(a) am Eingang oder innerhalb des Koppelfelds (KF) wird ein Koppelpunkt (KP1) außerhalb von Schutzzeiten, während derer die Koppelpunkte (KP) des Koppelfeldes (KF) umgeschaltet werden und keine Datenübertragung von und zu den Sendeempfängern (SE) der Leitungsanschlusseinheiten (LE) stattfindet, derart geschlossen, dass vom Sendeempfänger (SE1) der Leitungsanschlusseinheit (LE1) am Koppelpunkt (KP1) ankommende Signale zum Sendeempfänger (SE1) reflektiert werden;
(b) die Leitungsanschlusseinheit (LE1) sendet über ihren Sendeempfänger (SE1) Datenpakete an den Koppelpunkt (KP1) und variiert deren zeitlichen Absendebeginn oder zeitliches Absendeende, bis die Datenpakete am Koppelpunkt (KP1) zeitlich derart synchronisiert eintreffen, dass kein Abschnitt eines Datenpakets während der Schutzzeit des Koppelpunktes (KP1) eingeht, so dass die vom Koppelpunkt (KP1) reflektierten Datenpakete unverstümmelt am Sendeempfänger (SE1) wieder empfangen werden;
(c) die Leitungsanschlusseinheit (LE1) meldet an ein Steuerungssystem (SS) zur Steuerung des Koppelfelds (KF) und der Leitungsanschlusseinheiten (LE) der Vermittlungsanlage (VA), dass nun Synchronisation der Leitungsanschlusseinheit (LE1) mit dem Koppelfeld (KF) erreicht ist;
(d) das Steuerungssystem (SS) öffnet den der Leitungsanschlusseinheit (LE1) zugeordneten Koppelpunkt (KP1) dauerhaft und geht in den normalen Vermittlungsbetrieb über.

2. Verfahren nach Anspruch 1, **dadurch gekennzeichnet, dass** das Nutzlastfeld der vom Sendeempfänger (SE1) zu übertragenden Datenpakete zumindest während Verfahrensschritt (b) mit einem bestimmten Bitmuster, beispielsweise mit 8 Bit Zahlen, versehen wird, dass die Leitungsanschlusseinheit (LE1), insbesondere der Sendeempfänger (SE1) einen etwaigen Defekt des Bitmusters eines in den Schritten (a) oder (b) vom Koppelpunkt (KP1) reflektierten und vom Sendeempfänger (SE1) empfangenen Datenpakets aufgrund einer ungenügenden Synchronisation detektiert und erkennen kann, an welcher Stelle im zeitlichen Verlauf des Datenpakets sich der Defekt befindet und um welchen Betrag der zeitliche Absendebeginn oder das zeitliche Absendeende der Datenpakete in Schritt (b) verschoben werden muss, damit der Pakettakt synchron auf den Schutzzeittakt des Koppelfeldes (KF) passt.

3. Koppelfeld (KF) für paketorientierte Vermittlung mit zugehöriger Steuerung, mit Mitteln zur Durchführung des Verfahren nach Anspruch 1.

4. Koppelfeld (KF) nach Anspruch 3, **dadurch gekennzeichnet, dass** auch die Diagonalpunkte der Koppelmatrix mit Schaltern besetzt sind.

5. Koppelfeld nach Anspruch 3, **dadurch gekennzeichnet, dass** separate Hilfskoppelpunkte zum Reflektieren eines von einem Sendeempfänger (SE) einer Leitungsanschlusseinheit (LE) zurück zum selben Sendeempfänger (SE) vorgesehen sind.

6. Leitungsanschlusseinheit (LE) mit Sendeempfänger (SE), die Mittel zur Durchführung der Verfahrensschritte (b) und (c) nach Anspruch 1 aufweist.

7. Vermittlungsanlage (VA) mit Koppelfeld (KF), Steuerungssystem (SS) und Leitungsanschlusseinheiten (LE) zur Durchführung des Verfahrens nach Anspruch 1.

8. Servereinheit zur Unterstützung des Verfahrens nach Anspruch 1, insbesondere Netzwerk-Server.

9. Prozessorbaugruppe, insbesondere digitaler Signalprozessor (=DSP) zur Unterstützung des Verfahrens nach Anspruch 1.

10. Computerprogramm zur Unterstützung des Verfahrens nach Anspruch 1.
